# EUROPEAN PATENT APPLICATION

(11) **EP 0 957 593 A2**
(43) Date of publication of application: **17.11.1999**
(21) Application number: 99109556.3
(22) Date of filing: 12.05.1999
(51) Int. Cl.: H04B 7/005

(54) **Mobile communication system and method of controlling transmitted power from base station in mobile communication system**

(30) Priority: 13.05.1998 JP 13042298
(71) Applicant: NEC CORPORATION, Tokyo (JP)
(72) Inventor: Saito, Atsushi, NEC Saitama, Ltd., Kodama-gun, Saitama (JP)
(74) Representative: VOSSIUS & PARTNER

(57) **Abstract**

The present invention has an object to perform handoff control without generating a call drop even when a base station apparatus starts operation near a mobile terminal. The transmitted power from the base station apparatus is controlled such that it is at a minimum level when the base station apparatus starts operation and thereafter gradually increased, thereby preventing the terminal near the base station apparatus from receiving a pilot signal transmitted from the base station apparatus at a strong received power when the base station apparatus starts operation.

## Description

The present invention relates to a mobile communication system, and more particularly to a base station apparatus which sets communication channels to a plurality of mobile terminals to communicate with them.

In the IS-95 system, a mobile terminal during a call communicates with a plurality of base station apparatuses using the same frequency. A region in which each base station apparatus can actually communicate with a mobile terminal is set so broadly that there are overlap areas between areas in which a mobile terminal can communicate with one base station apparatus and areas in which the mobile terminal can communicate with another base station apparatus.

Thus, in the overlap areas between the area in which the mobile terminal can communicate with one base station apparatus and the area in which the mobile terminal can communication with another base station apparatus, the mobile terminal communicates with a plurality of base station apparatus, which is called a soft handoff or softer handoff.

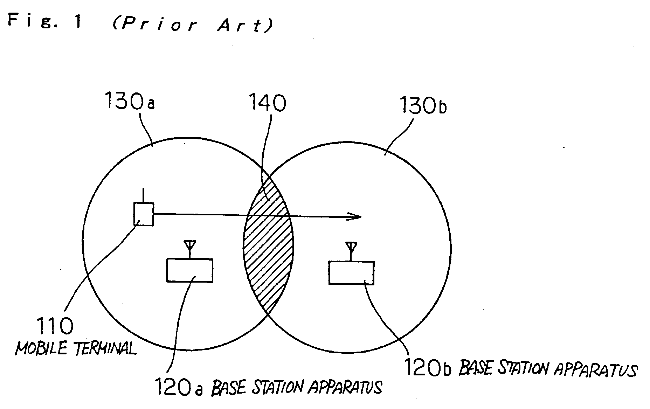

As shown in Fig. 1, a case is considered where mobile terminal 110 is moving in a direction toward cell 130b of base station apparatus 120b in a situation in which it is present within cell 130a of base station apparatus 120a and is serviced by base station apparatus 120a.

As mobile terminal 110 is moving away from base station apparatus 120a and approaching base station apparatus 120b, a signal strength of a pilot signal transmitted from base station apparatus 120a and received at mobile terminal 110 is gradually reduced and a signal strength of a pilot signal transmitted from base station apparatus 120b and received at mobile terminal 110 is gradually increased.

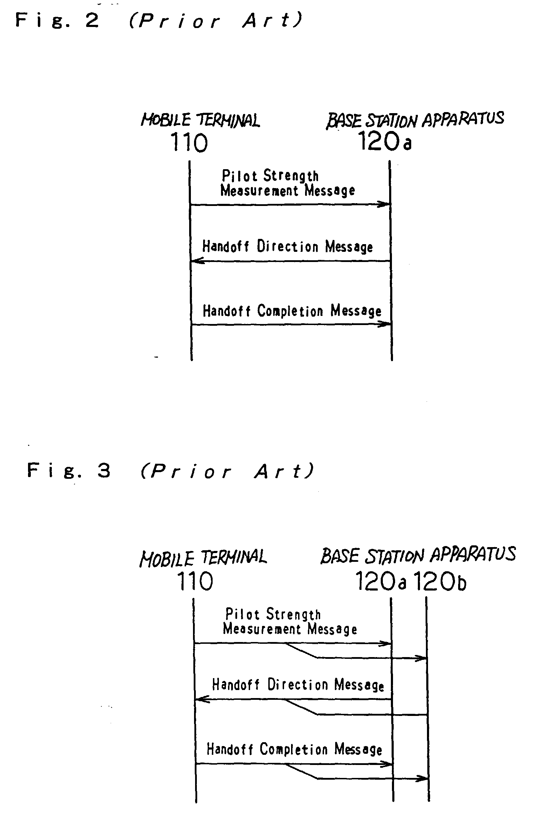

In mobile terminal 110, the received signal strength of the pilot signals transmitted from base station apparatuses 120a and 120b are periodically measured. When the received signal strength of the pilot signal transmitted from base station apparatus 120b exceeds a predetermined threshold value, a Pilot Strength Measurement Message, which is a handoff request, is transmitted from mobile terminal 110 to base station apparatus 120a, as shown in Fig. 2.

When the Pilot Strength Measurement Message transmitted from mobile terminal 110 is received at base station apparatus 120a, a Handoff Direction Message is transmitted from base station apparatus 120a to mobile terminal 110 and a direction is given to perform soft handoff to base station device 120b.

The Handoff Direction Message transmitted from base station apparatus 120a is received at mobile terminal 110, a Handoff Completion Message is transmitted from mobile terminal 110 to base station apparatus 120a, thereby making it possible for mobile terminal 110 to communicate also with base station apparatus 120b.

The handoff request transmitted from mobile terminal 110 to base station apparatus 120a is notified by base station apparatus 120a to base station apparatus 120b through a network (not shown).

At this time, mobile terminal 110 can communicate with both of base station apparatuses 120a and 120b.

Thereafter, mobile terminal 110 is moving further away from base station apparatus 120a, and the signal strength of the pilot signal transmitted base station apparatus 120a and received at mobile terminal 110 is further reduced. When the received signal strength of the pilot signal transmitted from base station apparatus 120a is reduced below a predetermined threshold value, a Pilot Strength Measurement Message is transmitted from mobile terminal 110 to base station apparatuses 120a and 120b, as shown in Fig. 3.

When the Pilot Strength Measurement Message transmitted from mobile terminal 110 is received at base station apparatuses 120a and 120b, a Handoff Direction Message is transmitted from base station apparatuses 120a and 120b to mobile terminal 110, thereby performing control for disconnecting base station apparatus 120a.

When the Handoff Direction Message transmitted from base station apparatuses 120a and 120b is received at mobile terminal 110, a Handoff Completion Message is transmitted from mobile terminal 110 to base station apparatuses 120a and 120b. Thereafter, the communication between mobile terminal 110 and base station apparatus 120a is stopped and mobile terminal 110 thus communicates only with base station apparatus 120b.

Incidentally, a region in which mobile terminal 110 can communicate with both of base station apparatuses 120a and 120b is area 140 in which cell 130a and cell 130b overlap each other.

Now, a case is considered where a base station apparatus newly starts operation in a region in which the IS-95 system offers service.

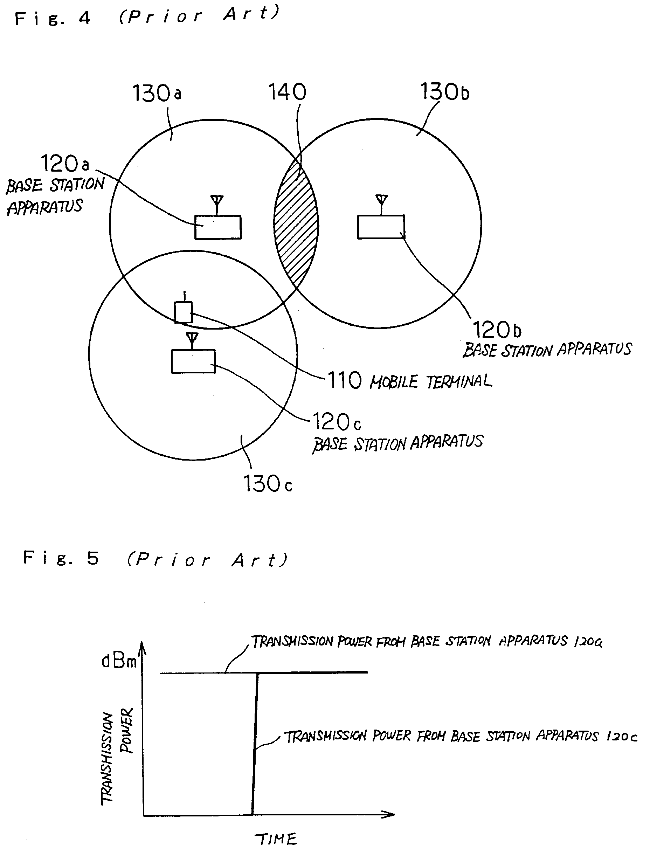

As shown in Fig. 4, when base station apparatus 120c newly starts operation in a region adjacent to cell 130a shown in Fig. 1, a pilot signal and an SYNC channel are instantaneously sent from base station apparatus 120c. Thus, if mobile terminal 110 is present near base station apparatus 120c, the pilot signal from base station apparatus 120c is received in mobile terminal 110 at a very strong received power. Therefore, the pilot signal transmitted from base station apparatus 120c interferes with a forward channel signal between mobile terminal 110 and base station apparatus 120a.

When the pilot signal transmitted from base station apparatus 120c and received at mobile terminal 110 exceeds a predetermined threshold value, handoff is performed at mobile terminal 110 from base station apparatus 120a to base station apparatus 120c. Since the additional procedure for handoff is being performed between mobile terminal 110 and base station apparatus 120a as shown in Fig. 2, the forward channel signal from base station apparatus 120a does not reach mobile terminal 110 when the pilot signal transmitted from base station apparatus 120c interferes with the forward channel signal between mobile terminal 110 and base station apparatus 120a as described above so that a call drop can occur.

The above-mentioned operation will be hereinafter described with reference to the drawings.

The transmitted power from base station apparatus 120c, as shown in Fig. 5, reaches a predetermined level with base station apparatus 120c starting operation.

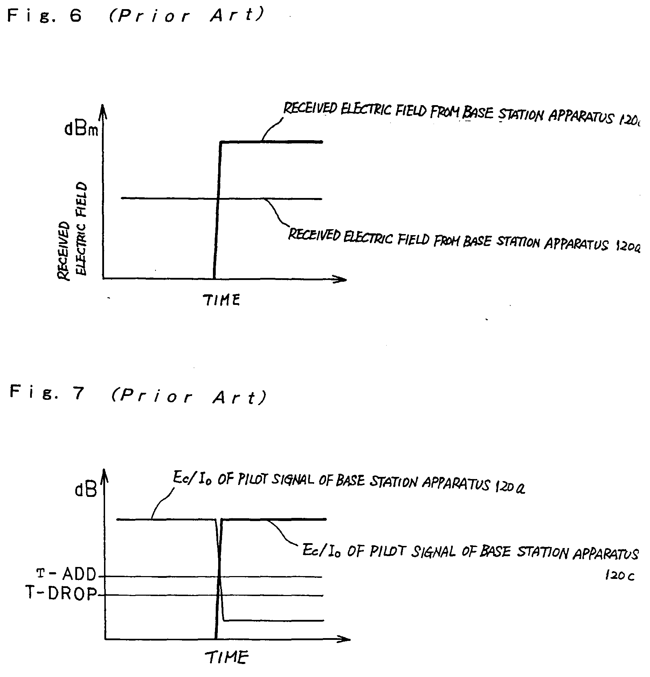

Then, as shown in Fig. 6, an electric field received at mobile terminal 110 from base station apparatus 120c becomes higher than an electric field received from base station apparatus 120a. Also, as shown in Fig. 7, the Ec/Io(Electric power of signal / Interference noise) of the pilot signal at mobile terminal 110 transmitted from base station device 120c becomes much higher than T-ADD which is a handoff threshold value.

When mobile terminal 110 is present near base station apparatus 120c as shown in Fig. 4, the Ec/Io of the pilot signal at mobile terminal 110 transmitted from base station apparatus 120a becomes below threshold value T-DROP at the same time the Ec/Io of the pilot signal at mobile terminal 110 transmitted from base station apparatus 120c becomes higher.

Since the additional procedure for handoff, as shown in Fig. 2, is performed between mobile terminal 110 and base station apparatus 120a, the down control signal from base station apparatus 120a does not reach mobile terminal 110 at all when the Ec/Io of the pilot signal at mobile terminal 110 transmitted from base station apparatus 120a is reduced below threshold value T-DROP, resulting in a call drop in mobile terminal 110.

It is an object of the present invention to provide a mobile communication system and a method of controlling transmitted power from a base station in the mobile communication system which can control handoff without generating a call drop when a base station apparatus newly starts operation near a mobile terminal.

In the present invention, the transmitted power from the base station apparatus is controlled such that it is at a minimum level when the base station apparatus starts operation and thereafter gradually increased, thereby preventing the terminal near the base station apparatus from receiving a pilot signal transmitted from the base station apparatus at a strong received power when the base station apparatus starts operation.

Thus, when the base station apparatus starts operation near the terminal, a forward channel signal from a base station apparatus with which the terminal has been communicating is prevented from failing to reach the terminal so that handoff is achieved without generating a call drop with the base station apparatus in the terminal.

The above and other objects, features, and advantages of the present invention will become apparent from the following description when taken in conjunction with the accompanying drawings which illustrate a preferred embodiment of the present invention by way of example.
Fig. 1 is a diagram for explaining soft handoff in a prior art mobile communication system;
Fig. 2 is a diagram showing a procedure for the soft handoff in the mobile communication system shown in Fig. 1;
Fig. 3 is a diagram showing a procedure for soft handoff deletion in the mobile communication system shown in Fig. 1;
Fig. 4 is a diagram for explaining an operation when one base station apparatus newly starts operation in the mobile communication system shown in Fig. 1;
Fig. 5 is a diagram showing transmission power from base station apparatuses shown in Fig. 4;
Fig. 6 is a diagram showing electric fields received from the base station apparatuses at a mobile terminal shown in Fig. 4;
Fig. 7 is a diagram showing the Ec/Io of pilot signals at the mobile terminal shown in Fig. 4 transmitted from the base station apparatuses;
Fig. 8 is a diagram showing an embodiment of a mobile communication system in the present invention;
Fig. 9 is a block diagram showing an example of a configuration of a base station apparatus shown in Fig. 8;
Fig. 10 is a diagram showing an embodiment of a transmission unit shown in Fig. 9;
Fig. 11 is a diagram showing transmission power from the base station apparatuses shown in Fig. 8 and Fig. 9;
Fig. 12 is a diagram showing electric fields received from the base station apparatuses at a mobile terminal shown in Fig. 8;
Fig. 13 is a diagram showing the Ec/Io of pilot signals at the mobile terminal shown in Fig. 8 transmitted from the base station apparatuses; and
Fig. 14 is a diagram showing another embodiment of the transmission unit shown in Fig. 9.

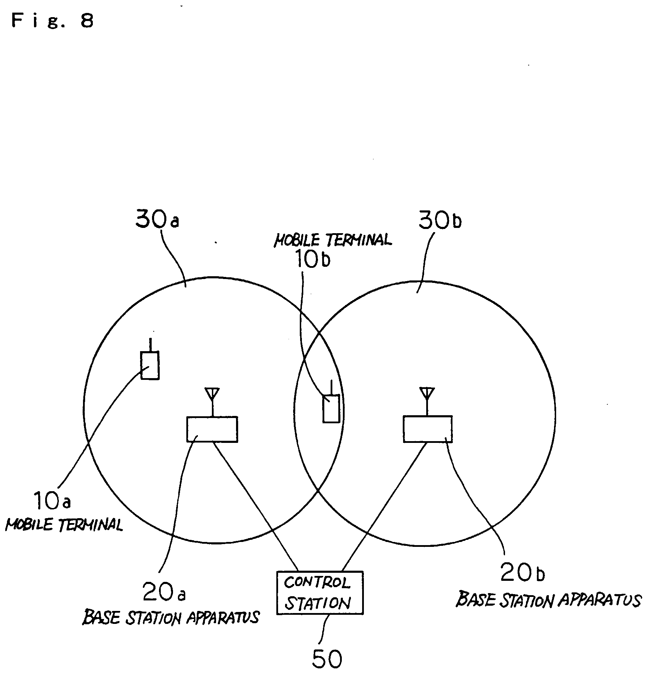

As shown in Fig. 8, in the present invention, base station apparatus 20a having cell 30a as a service area and base station apparatus 20b having cell 30b as a service area are provided in an area, thereby dividing the area into a plurality of cells 30a and 30b. Mobile terminal 10a is present in cell 30a, while mobile terminal 10b is present at a position closer to base station apparatus 20b than to base station apparatus 20a in an area in which cell 30a and cell 30b overlap area. Base station apparatuses 20a and 30b are respectively connected to control station 50 which is provided outside the area and connected to a communication network (not shown) comprising other control stations.

Incidentally, although only two base station apparatuses 20a and 20b, two cells 30a and 30b, and two mobile terminals 10a and 10b are shown in Fig. 8, many base station apparatuses are provided and many mobile terminals are present in each cell in this embodiment.

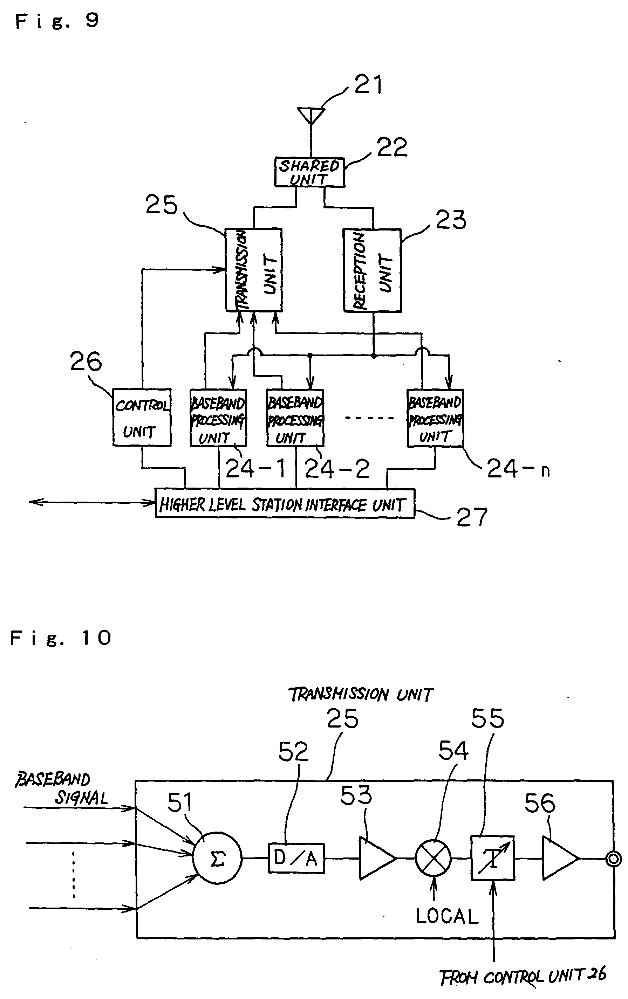

The base station apparatus in this embodiment, as shown in Fig. 9, comprises antenna 21 for transmitting and receiving a radio wave; reception unit 23 for receiving signals transmitted from mobile terminals 10a and 10b through antenna 21; a plurality of baseband processing units 24-1 to 24-n for performing baseband processing of the signal received at reception unit 23 and a signal to be transmitted through antenna 21; transmission unit 25 for adding, modulating and amplifying the baseband processed signals in baseband processing units 24-1 to 24-n to output the signal; control unit 26 for controlling transmission power in transmission unit 25; and higher level station interface unit 27 for interfacing to control station 50. Antenna 21, reception unit 23, and transmission unit 25 are connected through shared unit 22.

As shown in Fig. 10, transmission unit 25 comprises adder 51 for adding the baseband processed signals in baseband processing units 24-1 to 24-n to output the added signal; D/A converter 52 for converting the signal outputted from adder 51 to an analog signal to output the analog signal; amplifier 53 for amplifying the signal outputted from D/A converter 52 to output the amplified signal; modulator 54 for modulating the signal outputted from amplifier 53 to a higher harmonic signal to output the harmonic signal; variable attenuator 55 for attenuating the signal outputted from modulator 54 with an attenuation amount controlled by control unit 26 to output the attenuate signal; and amplifier 56 for amplifying the signal outputted from variable attenuator 55 to output the amplified signal to shared unit 22.

In the base station apparatus arranged as described above, the baseband processed signals in baseband processing units 24-1 to 24-n are added in adder 51 and converted to an analog signal in D/A converter 52.

The analog-converted signal is amplified in amplifier 53 and then converted to a higher harmonic signal in modulator 54.

Thereafter, the converted higher harmonic signal is attenuated in variable attenuator 55 with an attenuation amount controlled by control unit 26, again amplified in amplifier 56 and then outputted to shared unit 22.

In the following, an operation will be described when base station apparatus 20b restarts operation after it stops the operation in a mobile communication system arranged as mentioned above.

When the operation of base station apparatus 20b is started, the attenuation amount of variable attenuator 55 is set at a maximum value by control unit 26.

Thereafter, the attenuation amount of variable attenuator 55 is gradually reduced under control of control unit 26 and finally, the attenuation amount is set such that transmitted power from base station apparatus 20b is at a specified value.

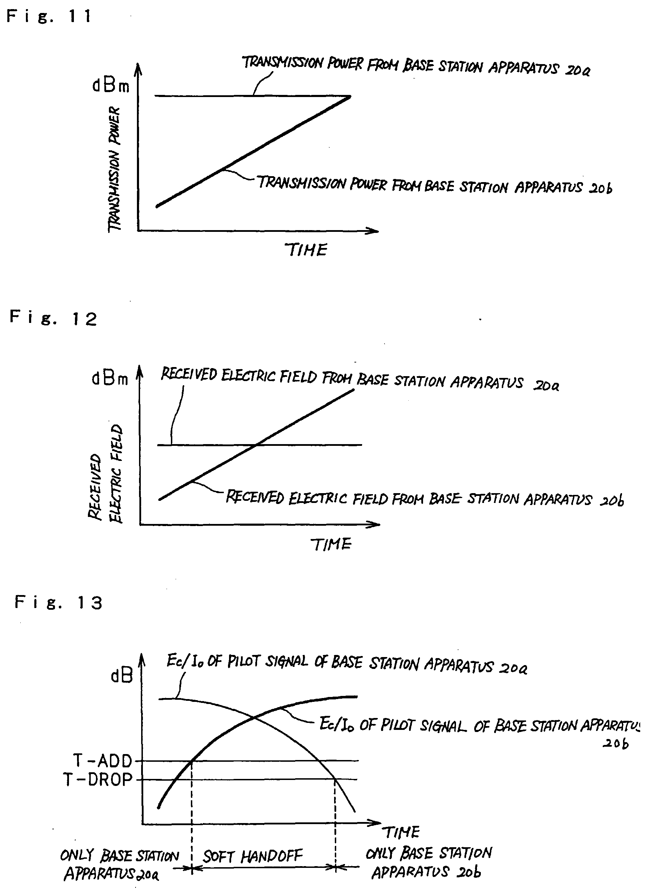

Thus, as shown in Fig. 11, the transmitted power from base station apparatus 20b is controlled such that it is very low immediately after the operation of base station apparatus 20b is started, then gradually increased, and finally at the specified value.

As shown in Fig. 12, an electric field received from base station apparatus 20b at mobile terminal 10 is also gradually increased after the operation of base station apparatus 20b is started, and becomes higher than an electric field received from base station apparatus 20a.

The Ec/Io of a pilot signal at mobile terminal 10 transmitted from base station apparatus 20b, as shown in Fig. 13, is gradually increased in accordance with the change of the electric field received from base station apparatus 20b at mobile terminal 10 as shown in Fig. 12. With this, the Ec/Io of a pilot signal at mobile terminal 10 transmitted from base station apparatus 20a is gradually reduced. Thus, a soft handoff period in which mobile terminal 10 can communicate with both of base station apparatuses 20a and 20b is maintained.

In this manner, since the transmitted power from the base station apparatus is controlled so as to be increased gradually when the operation thereof is started, the mobile terminal can detect the start of the operation of the base station apparatus and perform handoff with the base station apparatus with which it has been communicating.

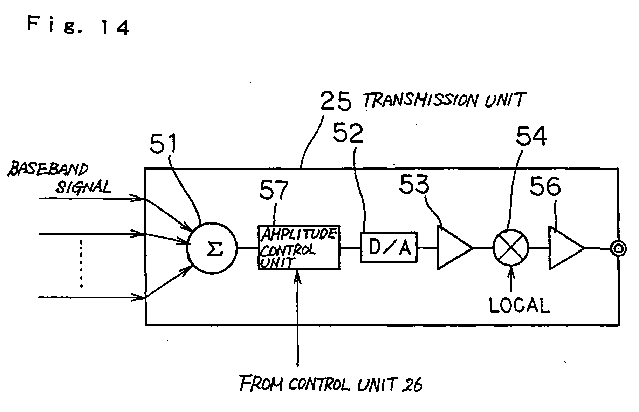

In the embodiment as shown in Fig. 14, transmission unit 25 comprises adder 51 for adding baseband processed signals in baseband processing units 24-1 to 24-n to output the added signals; amplitude control unit 57 for controlling the amplitude of the signal outputted from adder 51; D/A converter 52 for converting the amplitude-controlled signal in amplitude control unit 57 to an analog signal to output the analog signal; amplifier 53 for amplifying the signal outputted from D/A converter 52 to output the amplified signal; modulator 54 for modulating the signal outputted from amplifier 53 to a higher harmonic signal to output the higher harmonic signal; and amplifier 56 for amplifying the signal outputted from modulator 54 to output the amplified signal to shared unit 22. The operation of amplitude control unit 57 is controlled by control unit 56.

In a base station apparatus arranged as mentioned above, first, the baseband processed signals in baseband processing units 24-1 to 24-n are added in adder 51.

Next, the signal added in adder 51 is applied to amplitude control unit 57 where the amplitude of the applied signal is controlled under control of control unit 26 such that the amplitude of the signal is at a minimum level immediately after the base station apparatus starts operation and thereafter the amplitude is gradually increased.

The amplitude-controlled signal in amplitude control unit 57 is converted to an analog signal in D/A converter 52 and then amplified in amplifier 53.

Thereafter, the signal amplified in amplifier 53 is converted to a higher harmonic signal in modulator 54, again amplified in amplifier 56, and then outputted through antenna 21.

Although a certain preferred embodiment of the present invention has been shown and described in detail, it should be understood that various changes and modifications may be made therein without departing from the scope of the appended claims.

## Claims

1. A mobile communication system comprising:
a base station apparatus arranged in each of a plurality of cells; and
a terminal present in said cell for setting a channel to one or a plurality of said base station apparatuses to communicate therewith;
wherein said base station apparatus is formed such that transmitted power therefrom is at a minimum level when said base station apparatus starts operation and thereafter the transmitted power is increased.

2. The mobile communication system according to claim 1, wherein said base station apparatus comprises attenuation means for attenuating a transmission signal with a variable attenuation amount.

3. The mobile communication system according to claim 2, wherein said base station apparatus comprises control means for controlling the attenuation amount and said control means performs control such that the attenuation amount is at a maximum level when said base station apparatus starts operation and thereafter the attenuation amount is reduced.

4. The system according to claim 1, 2 or 3,
wherein said base station apparatus comprises amplitude control means for controlling an amplitude of a transmission signal.

5. The mobile communication system according to claim 4, wherein said base station apparatus comprises control means for controlling an operation of said amplitude control means and said control means performs control such that the amplitude of the transmission signal is at minimum level when said base station apparatus starts operation and thereafter the amplitude of the transmission signal is increased.

6. A method of controlling transmitted power from a base station in a mobile communication system comprising a plurality of cells, a base station apparatus arranged in each of the plurality of cells, and a terminal present in the cell for setting a channel to one or a plurality of the base station apparatuses to communicate therewith for controlling the transmitted power from the base station apparatus, the method comprising the steps of:
setting the transmitted power from the base station apparatus at a minimum level when the base station starts operation; and
increasing the transmitted power.
